# EUROPÄISCHE PATENTSCHRIFT

(11) **EP 3 710 617 B1**
(45) Veröffentlichungstag und Bekanntmachung des Hinweises auf die Patenterteilung: **05.07.2023**
(21) Anmeldenummer: 19702349.2
(22) Anmeldetag: 18.01.2019
(51) Int. Cl.: C25B 1/23, C25B 1/04, C25B 9/05, C25B 9/19, C25B 15/08

(54) **ELEKTROCHEMISCHE HERSTELLUNG VON KOHLENSTOFFMONOXID UND/ODER SYNTHESEGAS**
ELECTROCHEMICAL PRODUCTION OF CARBON MONOXIDE AND/OR SYNGAS
FABRICATION ÉLECTROCHIMIQUE DE MONOXYDE DE CARBONE ET/OU DE GAZ DE SYNTHÈSE

(30) Priorität: 15.02.2018 DE 102018202344
(43) Veröffentlichungstag der Anmeldung: 23.09.2020
(73) Patentinhaber: Siemens Energy Global GmbH & Co. KG, 81739 München (DE); Linde GmbH, 82049 Pullach (DE)
(72) Erfinder: HENTSCHEL, Benjamin, 80689 München (DE); PESCHEL, Andreas, 82515 Wolfratshausen (DE); HANEBUTH, Marc, 90482 Nürnberg (DE); SCHMID, Günter, 91334 Hemhofen (DE); TAROATA, Dan, 91058 Erlangen (DE)
(86) Internationale Anmeldenummer: PCT/EP2019/051246
(87) Internationale Veröffentlichungsnummer: WO 2019/158305

(56) Entgegenhaltungen:
- WO-A1-2018/001636
- DE-A1-102013 226 357

## Beschreibung

Die vorliegende Erfindung betrifft ein Elektrolysesystem und ein Elektrolyseverfahren zur Herstellung von Kohlenstoffmonoxid und/oder Synthesegas.

### Stand der Technik

### Kohlenstoffmonoxid-Herstellung

Kohlenstoffmonoxid kann heutzutage über verschiedene Verfahren hergestellt werden. Beispiele dafür sind die Dampfreformierung von Erdgas, bei der Kohlenstoffmonoxid neben Wasserstoff entsteht. Auch über die Vergasung verschiedener Einsatzstoffe wie Kohle, Erdöl oder Erdgas und deren anschließende Aufreinigung kann Kohlenstoffmonoxid gewonnen werden.

Auch kann die Synthese von Kohlenstoffmonoxid elektrochemisch aus Kohlenstoffdioxid erfolgen. Dies ist zum Beispiel in einer Hochtemperatur-Elektrolysezelle SOEC möglich (engl. für solid oxide electrolysis cell). Dabei bildet sich Sauerstoff auf der Anodenseite und Kohlenstoffmonoxid auf der Kathodenseite nach folgender Reaktionsformel:

CO₂ -> CO + 1/2 O₂.

Die Funktionsweise der SOEC und verschiedene Prozesskonzepte sind beispielsweise in der Patentliteratur WO2014/154253A1, WO2013131778, WO2015014527, EP2940773A1 beschrieben. Die SOEC ist hier zusammen mit einer möglichen Kohlenstoffdioxid-Kohlenstoffmonoxid-Trennung mittels Absorption, Membran, Adsorption oder kryogener Trennung erwähnt. Die genaue Ausgestaltung und mögliche Kombinationen der Trennkonzepte sind jedoch nicht offenbart.

### Synthesegas-Herstellung

Die SOEC kann auch mit Wasser und Kohlenstoffdioxid als Einsatzstoff, dem sogenanntem Feed, betrieben werden, wodurch Synthesegas elektrochemisch hergestellt werden kann. Unter Synthesegas versteht man eine Mischung aus Kohlenstoffmonoxid und Wasserstoff. Es handelt sich dann um eine sogenannte Ko-Elektrolyse. Dabei bezieht sich Ko auf den Einsatz zweier Feeds, nämlich Wasser und Kohlenstoffdioxid.

Die elektrochemische Herstellung von Kohlenstoffmonoxid aus Kohlenstoffdioxid ist auch mit einer Niedertemperatur-Elektrolyse am wässrigen Elektrolyten möglich, wie bei Delacourt et al. 2008, DOI 10.1149/1.2801871 beschrieben. Hier laufen beispielsweise die folgenden Reaktionen ab:
Kathode:

   CO₂ + 2 e⁻ + H₂O → CO + 2 OH⁻
Anode:

   H₂O → 1/2 O₂ + 2 H⁺ + 2 e⁻

Das Proton H⁺ wandert dabei durch eine Protonentauschermembran (Proton Exchange Membran, PEM) von der Anoden- auf die Kathodenseite. Teilweise läuft an der Kathode auch die Bildung von Wasserstoff ab: 2 H₂O + 2 e⁻ → H₂ + 2 OH~

Je nach Aufbau der Elektrolysezelle können auch andere Kationen als Protonen (z.B. K+). die sich im Elektrolyten befinden, geleitet werden. Eine sogenannte Anionentauschermembran (Anion Exchange Membrane, AEM) kann ebenfalls je nach Aufbau benutzt werden.Ähnlich wie bei der Hochtemperatur-Elektrolyse kann entweder primär Kohlenstoffmonoxid erzeugt werden oder Synthesegas.

Je nach Einsatz eines geeigneten Katalysators können auch andere Wertprodukte entstehen. Eine Übersicht über die Funktionsweise und Reaktionen liefert die Patentliteratur WO2016124300A1 oder WO2016128323A1 oder auch die wissenschaftliche Literatur Kortelever et al. 2012, DOI 10.1021/acs.jpclett.5b01559. Ein Betrieb der Niedertemperatur-Elektrolyse unter erhöhtem Druck ist ebenfalls in der Literatur erwähnt: Dufek et al. 2012, DOI 10.1149/2.011209jes. Der Fokus liegt dabei auf der Effizienz und den zu erreichenden Stromstärken.

Die DE 10 2013 226 357 A1 offenbart in Verfahren zur elektrolytischen Umsetzung einer Flüssigkeit oder Lösung in einer Elektrolyseeinrichtung/Elektrolysezelle, bei der ein gasförmiges Produkt entsteht, wobei die Zufuhr der Flüssigkeit oder Lösung mit zeitlich veränderlichem Druck erfolgt, sowie eine Vorrichtung zur elektrolytischen Umsetzung einer Flüssigkeit oder Lösung.

Die WO 2018/001636 A1 betrifft eine Anordnung zur Elektrolyse von Kohlendioxid, bei der eine Gaskammer einen Auslass für einen Elektrolyten, das Kohlendioxid und die Produktgase der Elektrolyse aufweist, wobei der Auslass mit einem elektrolytischen Kreislauf über eine Drossel verbunden ist, die so ausgelegt ist, dass sie beim Durchströmen eines Gemisches aus Produktgasen und flüssigen Elektrolyten eine definierbare Druckdifferenz zwischen Gaskammer und einer Kathodenkammer erzeugt.

In allen beschriebenen Herstellungsmethoden besteht die Problematik, dass Reste von Kohlenstoffdioxid,Kohlenstoffmonoxid und Wasserstoff im Sauerstoff-Strom verbleiben und darüber verloren gehen. Dieses Problem wird aber weder technisch gelöst noch überhaupt als solches identifiziert.

Folglich stellt es sich als technisch erforderlich dar, eine verbesserte Lösung für die Kohlenstoffmonoxid- und Synthesegasherstellung vorzuschlagen, welche die aus dem Stand der Technik bekannten Nachteile vermeidet. Insbesondere soll die vorzuschlagende Lösung die beschriebenen Gasverluste vermeiden.

Diese der vorliegenden Erfindung zugrundeliegenden Aufgaben werden durch ein Elektrolysesystem gemäß dem Patentanspruch 1 sowie durch ein Elektrolyseverfahren gemäß dem Patentanspruch 2 gelöst. Vorteilhafte Ausgestaltungen der Erfindung sind Gegenstand der Unteransprüche.

### Beschreibung der Erfindung

Das erfindungsgemäße Elektrolysesystem nach Anspruch 1 zur Herstellung von Kohlenstoffmonoxid und/oder Synthesegas umfasst eine Druck-Elektrolysezelle, einen in die Druck-Elektrolysezelle führenden Katholyteinlass und einen aus der Druck-Elektrolysezelle herausführenden Katholytauslass. Unter einer Druck-Elektrolysezelle ist eine Elektrolysezelle zu verstehen, die in einem Druckbereich oberhalb von 500 mbar betrieben werden kann.

Der Katholytauslass mündet in eine Katholytleitung, welche eine Drosseleinrichtung und einen Phasentrenner aufweist, der die Katholytleitung in eine Katholyt-Gasleitung und eine Katholyt-Flüssigleitung aufteilt.

Mittels dieses Elektrolysesystems kann eine Niedertemperatur-Elektrolyse bei hohem Arbeitsdruck betrieben werden, ohne signifikante Mengen an Wasserstoff, Kohlenstoffmonoxid oder Kohlenstoffdioxid mit dem Sauerstoff-Strom zu verlieren, da der Katholyt im Nachgang der Elektrolyse wieder entspannt werden kann, das heißt auf einen niedrigeren Druck gebracht werden kann. Durch die Entspannung des Katholyts können anschließend physikalisch gelöste Gase abgetrennt werden.

Die Erfindung hat außerdem den Vorteil, gleichermaßen für die Kohlenstoffmonoxid-Herstellung sowie für die Synthesegasherstellung in einer Niedertemperatur-Ko-Elektrolyse eingesetzt werden zu können. Auch bei der Ko-Elektrolyse hat ein hoher Elektrolysedruck Vorteile für die Abtrennung von ggf. vorliegendem Kohlenstoffdioxid aus dem Katholyt.

Die Drosseleinrichtung kann beispielsweise ein steuerbares Ventil und/oder einen Druckminderer aufweisen.

Erfindungsgemäß weist die Katholyt-Gasleitung einen Kompressor auf und ist zur Rückführung des im Phasentrenner (217) abgetrennten Gasstroms in die Druck-Elektrolysezelle (20) ausgelegt. Mit diesem solchen Recyclekompressor wird eine Druckerhöhung durchgeführt, die eine Rückführung des bei der Entspannung des Katholytstroms gewonnenen Gases in die Elektrolysezelle als Edukt ermöglicht.

Diese Ausführung hat den besonderen Vorteil, dass mittels der Gastrennung physikalisch gelöste (Neben-)Produkt-Gase aus dem Katholytstrom zurück gewonnen werden können, während die Herstellung von reinem Kohlenstoffmonoxid ermöglicht wird, da im Elektrolyseur stets ein Gemisch aus Kohlenstoffmonoxid, Kohlenstoffdioxid und Wasserstoff entsteht.

Umfasst der Recyclekompressor den Phasentrenner, leistet dieser demnach zum einen, die Gasabtrennung des wiederverwendbaren Kohlenstoffdioxids, zum anderen erfüllt er die Kompressorfunktion, die nötig ist, da der Druck in der Gastrennung niedriger ist als in der Elektrolysezelle.

Bevorzugt erfolgt eine Kohlenstoffmonoxidabtrennung aus dem Katholytstrom als auch aus dem Produktgasstrom, wenn dieses aus einem Reaktionsraum rückseitig der Kathode der Elektrolysezelle ausgeführt wird. Dazu ist dann vorzugsweise ein zweiter Recyclekompressor vorgesehen. Bei dieser Ausführungsform ist die Kathode beispielsweise als Gas-Diffusions-Elektrode ausgestaltet. Abgetrenntes Kohlenstoffdioxid wird in diesem Beispiel dem Kohlenstoffdioxid-Feed, dem Edukteinlass der Elektrolysezelle wieder zugeführt.

Das erfindungsgemäße Elektrolyseverfahren nach Anspruch 2 dient zur Herstellung von Kohlenstoffmonoxid und/oder Synthesegas. Unter Synthesegas versteht man eine Mischung aus Wasserstoff und Kohlenstoffmonoxid, wobei das Verhältnis je nach Anwendung variieren kann. Somit stellt Kohlenstoffmonoxidgas, welches auch geringe Mengen Wasserstoff enthält, ebenso wie Wasserstoffgas, welches auch geringe Mengen Kohlenstoffmonoxid enthält, bereits ein Synthesgas dar. Typische Stoffmengenverhältnisse von Wasserstoff zu Kohlenstoffmonoxid liegen allerdings im Bereich von 1:3 bis 3:1.

In einem Verfahrensschritt wird der gasbeladene Katholytstrom entspannt. Somit kann im Elektrolyseschritt in einem höheren Druckbereich gearbeitet werden und anschließend der Druck wieder vermindert werden. Der entspannte Katholytstrom wird dann zu einem großen Teil von vorher gelöstem Wasserstoff, Kohlenstoffmonoxid und Kohlenstoffdioxid befreit.

Mittels dieses Verfahrens kann eine Niedertemperaturelektrolyse eingesetzt werden und auf einem hohen Druckniveau gearbeitet werden. Der Druck in der Elektrolysezelle kann zwischen 500 mbar und 100 bar betragen. Ein bevorzugter Arbeitsbereich liegt zwischen 5 bar und 50 bar, insbesondere zwischen 20 bar und 40 bar.

Durch das hohe Arbeitsdruckniveau muss das Gas nicht mehr zwangsläufig vor der Abtrennung der gewünschten Elektrolyseprodukte komprimiert werden. Dies hat den Vorteil Apparate sowie Energie einzusparen.

Zur Abtrennung der gewünschten Elektrolyseprodukte wird vorzugsweise ein vom Katholytstrom abgetrennte Gasstrom in den Recyclekompressor eingespeist, in dem eine Gastrennung vorgenommen wird, wodurch Gasverluste vermieden werden.

In einer beispielhaften Variante des Elektrolyseverfahrens wird ein von Gas befreite Flüssigstrom wieder auf den Betriebsdruck gebracht, der in der Elektrolysezelle vorherrscht. Dieser liegt insbesondere über 5 bar, beispielsweise auch in einem hohen Druckbereich über 20 bar. Anschließend erfolgt wieder die Vereinigung mit dem Anolytstrom.

In einer weiteren beispielhaften Variante des Elektrolyseverfahrens wird der gasbeladene Anolytstrom mittels einer Gas-Flüssig-Trennung vom Sauerstoff befreit. Die Gas-Flüssig-Trennung kann beispielsweise mittels gängiger Verfahren erfolgen.

Bei dieser Variante wird zwar der Druck nicht reduziert, so dass nur der Anteil des Sauerstoffs, der sich über der Löslichkeitsgrenze befindet entfernt werden kann. Dadurch aber befindet sich kaum Wasserstoff, Kohlenstoffmonoxid, und Kohlenstoffdioxid im Sauerstoff-Strom.

In einer bevorzugten Variante des Elektrolyseverfahrens wird der von Sauerstoff befreite Anolytstrom wieder mit dem Katholytstom vereinigt.

Der Effekt der Zwischenentspannung auf die Zusammensetzung des Abgasstroms ist in Tabelle 1 verdeutlicht:

| Pressure (3) | Temperature (3) | Spec. electrolyte flow rate (14) | O₂ vent (10) (H₂/CO/CO₂ | Spec. CO₂ consumption (1) |
|---|---|---|---|---|
| [bara] | [°C] | [t/Nm³_{co}] | [mol%] | [Nm³_{co2}/Nm³_{co}] |
| 2 | 35 | 0.6 | 0/0.3/13 | 1.3 |
| 2 | 60 | 0.6 | 0/0.2/8 | 1.3 |
| 20 | 35 | 0.8 | 0.3/3/42 | 1.7 |
| 20 | 60 | 0.7 | 0.3/2/36 | 1.6 |
| 2 mit Zwischenentspannung | 35 | | | |
| 2 mit Zwischenentspannung | 60 | | | |
| 20 mit Zwischenentspannung | 35 | 0.6 | 0/0/7 | 1.2 |
| 20 mit Zwischenentspannung | 60 | 0.6 | 0/0/6 | 1.2 |

Die vorliegende Erfindung hat darüber hinaus den Vorteil, eine Möglichkeit der Kohlenstoffdioxidverwertung anzubieten. Aktuell wird ca. 80 % des weltweiten Energiebedarfs durch die Verbrennung von fossilen Brennstoffen gedeckt, deren Verbrennungsprozesse eine weltweite Emission von etwa 34000 Millionen Tonnen Kohlenstoffdioxid in die Atmosphäre pro Jahr verursacht. Durch diese Freisetzung in die Atmosphäre wird sich aktuell des Großteils an Kohlenstoffdioxid entledigt, was z.B. bei einem Braunkohlekraftwerk bis zu 50000 Tonnen pro Tag betragen kann. Kohlenstoffdioxid gehört zu den sogenannten Treibhausgasen, deren negative Auswirkungen auf die Atmosphäre und das Klima diskutiert werden. Da Kohlenstoffdioxid thermodynamisch sehr stabil ist, kann es nur schwierig zu wiederverwertbaren Produkten reduziert werden, was die Wiederverwertung von Kohlenstoffdioxid in relevanten Maßstäben bisher verhindert hat.

Ein natürlicher Kohlenstoffdioxid-Abbau erfolgt beispielsweise durch Fotosynthese. Dabei werden in einem zeitlich und auf molekularer Ebene räumlich in viele Teilschritte aufgegliederten Prozess Kohlenstoffdioxid zu Kohlehydraten umgesetzt. Dieser Prozess ist so nicht einfach großtechnisch adaptierbar und eine Kopie des natürlichen Fotosyntheseprozesses mit großtechnischer Fotokatalyse ist bisher nicht ausreichend effizient.

In einer weiteren vorteilhaften Variante des Elektrolyseverfahrens wird die sich an der Kathode, insbesondere die sich im Katholyt bildende Gasphase wieder in die Elektrolysezelle eingeleitet. Physikalisch gelöstes Gas kann aus dem Katholyt entfernt werden, indem der Druck auf diesen erniedrigt wird. Die sich im Katholyt bildende Gasphase enthält beispielsweise in erster Linie Kohlenstoffdioxid mit kleineren Mengen an Kohlenmonoxid und Wasserstoffgas. Bevorzugt wird dieses etwa in Gänze wieder zusammen mit dem Kohlenstoffdioxid-Feed in die Elektrolysezelle zugeleitet, nachdem es wieder auf den Betriebsdruck des Elektrolyseurs gebracht wurde, wenn enthaltene Mengen an Wasserstoff gering sind oder Wasserstoff in der Gastrennung gut abgetrennt werden kann oder Wasserstoff im Produktgas nicht stört.

In einer weiteren vorteilhaften Variante des Elektrolyseverfahrens wird das nach der Entspannung abgetrennte Gasgemisch direkt in eine Gastrennung geführt.

Auch auf nicht oder nur teilweise gemischte Elektrolyte ist die Erfindung anwendbar.

In einer weiteren vorteilhaften Variante des Elektrolyseverfahrens wird die Elektrolyseabwärme über den Elektrolytstrom abgeführt. Der Wirkungsgrad der Elektrolyse liegt beispielsweise zwischen circa 40% und 80%. Die entstehende Abwärmemenge wird über den Elektrolytkreislauf abgeführt. Eine Begrenzung der Temperaturerhöhung in der Elektrolysezelle um wenige Kelvin bedingt dann einen relativ hohen Elektrolytstrom.

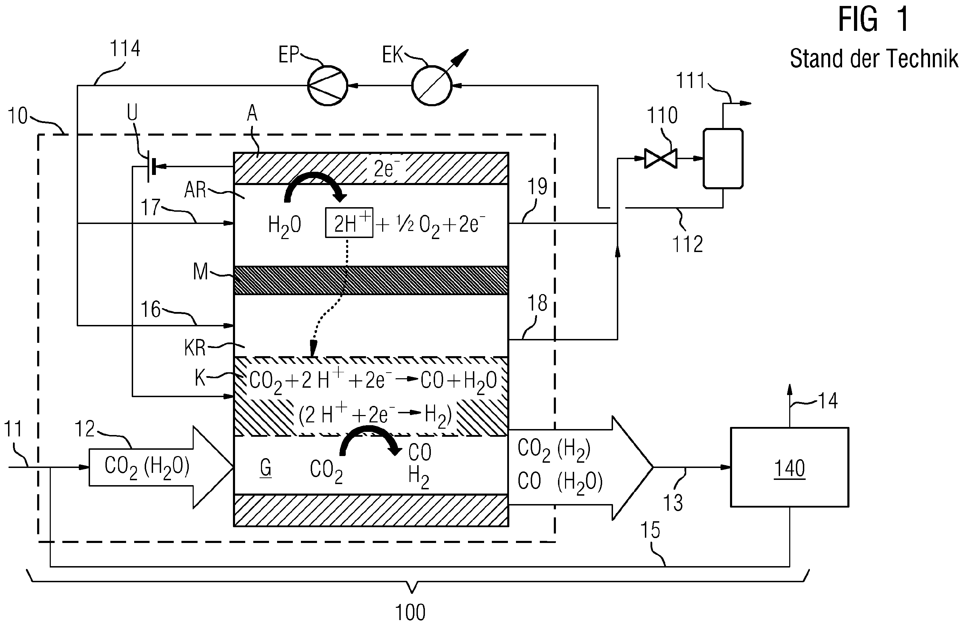

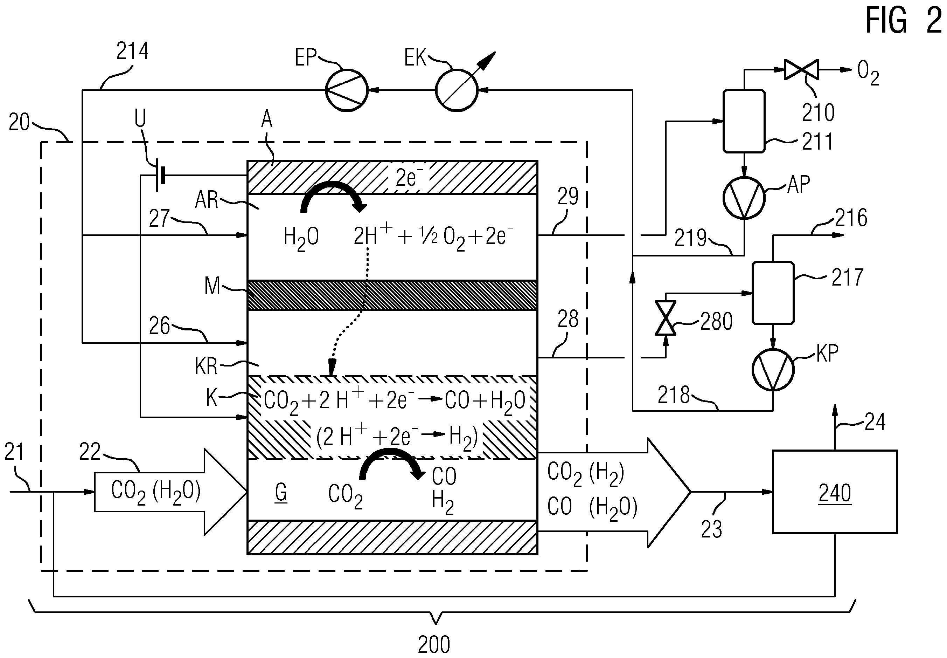

Zur beispielhaften Erläuterung der vorliegenden Erfindung werden noch die Figuren 1 und 2 der angehängten Zeichnung beschrieben:
Die Figuren zeigen jeweils ein Elektrolysesystem 100,200 mit gemischtem Elektrolytkreislauf 114, 214. Der Katholyt 16, 26 wird in den Kathodenraum KR eingespeist und der Anolyt 17,27 in den Anodenraum. Eine Membran M, z.B. eine ionenaustauschende Membran oder auch eine poröse Membran, auch Diaphragma genannt, sorgt für den Ladungstransport durch Austausch der ionischen Ladungsträger. In den Figuren ist der Durchtritt der Protonen H⁺ mittels gepunktetem Pfeil dargestellt. Außerdem stellt die Membran M sicher, dass keine Vermischung der Gase stattfindet, die an Anode A und Kathode K entstehen. Um einen Konzentrationsunterschied der Ionensorten zwischen Anolyt und Katholyt zu vermeiden, werden die Elektrolytströme 18,28, 19,29 in der Niedertemperaturelektrolyse bevorzugt vereinigt und nach erfolgter Durchmischung wieder aufgeteilt.

Die gasbeladenen Elektrolytströme 18,28, 19,29 werden in den gezeigten Beispielen einer Gas-Flüssig-Abtrennung 211 unterworfen. Beispielsweise wird der flüssige Elektrolytstrom außerdem gekühlt, um die Abwärme aus der Elektrolysezelle 10, 20 zu entfernen. Ein sogenannter Make-up Strom an Elektrolyt wird nach der Gasabtrennung 211 dem Elektrolytkreislauf 114, 214 zugeführt um Elektrolytverluste auszugleichen.

In dem in der Figur 1 gezeigten und aus dem Stand der Technik bekannten Elektrolyseverfahren steigt durch die Anodenreaktion der Sauerstoffanteil im Anolyten an, so dass dieser Sauerstoff aus dem austretenden Anolytstrom 19 wieder entfernt werden muss, bevorzugt mittels einer Gas-Flüssig-Abtrennung. Durch den Kontakt des (austretenden) Katholyten 18 mit dem Gaskanal G über die Gas-Diffusions-Kathode K, gelangen außerdem Wasserstoff, Kohlenstoffmonoxid und Kohlenstoffdioxid in den Katholyten 18. Bei der Gas-Flüssigabtrennung gehen diese dann über den Sauerstoffstrom 111 dem Elektrolysesystem 100 verloren. Die Niedertemperatur-Elektrolyse bei erhöhtem Druck könnte so unwirtschaftlich werden. Eine Rückgewinnung von Wasserstoff, Kohlenstoffmonoxid und Kohlenstoffdioxid aus dem Sauerstoffstrom 111 wäre ebenfalls nicht effizient.

In der Figur 2 ist ein Elektrolysesystem 200 gezeigt, wie es für eine Ausführung der Erfindung eingesetzt werden könnte: Es ist ein gemeinsamer Elektrolytkreislauf 214 vorhanden, der erst vor dem Eintritt in die Elektrolysezelle 20 in Anolyt-27 und Katholyteinlass 26 aufgespalten wird. Die verwendeten Elektrolyte werden kontinuierlich durch die Elektrolysezelle 20, d.h. jeweils durch den Anodenraum AR und durch den Kathodenraum KR gepumpt. Dazu weißt der Elektrolytkreis 214 zumindest eine Elektrolytpumpe EP auf.

Im Anodenraum AR ist eine Anode A, im Kathodenraum KR eine Kathode K angeordnet, welche über eine Spannungsquelle U elektrisch verbunden sind. Die Kathode K ist vorzugsweise als Gas-Diffusions-Elektrode ausgestaltet. Anodenraum AR und Kathodenraum KR sind durch eine kationendurchlässige Membran M voneinander getrennt, um Reduktions- und Oxidations(neben)produkte getrennt voneinander durch die Anolyt-29 und Katholytauslässe 28 entnehmen zu können.

Die Elektrolysereaktionen sind entsprechend in der Elektrolysezelle 20 an den jeweiligen Elektroden vermerkt. Die Kohlenstoffdioxidreduktion findet im Gaskanal G rückseitig der Kathode K statt, der als Reaktionsraum ausgestaltet ist. Durch die Ausgestaltung der Kathode K als Gas-Diffusions-Elektrode bleiben die Produkte vom Katholyten getrennt und können dem Produktauslass 23 der Elektrolysezelle 20 entnommen werden.

Der Produktauslass 23 der Elektrolysezelle 20 mündet in eine Gastrennung, bevorzugt in einen Downstream-Prozess 240. Kohlenstoffdioxid wird dem Kohlenstoffidoxid-Feed 22 wieder zugeführt. Dies ist besonders gut dann möglich, wenn nur geringe Mengen Wasserstoff enthalten sind oder der Wasserstoffanteil in der Gastrennung 240 erfolgreich minimiert wurde. Das eigentliche Produkt nach der Kombination aus Elektrolyse 20 und Gastrennung 240 wird dann ausgeleitet 24.

Bevor Katholyt- 28 und Anolytauslässe 29 wieder zum Elektrolytstrom 214 vereinigt werden, werden diese von (Neben-)produkten der Elektrolyse befreit. Diese sind häufig Gase, welche, durch den Arbeitsdruck in der Elektrolysezelle 20 bedingt, physikalisch im Elektrolyten gelöst vorliegen. Aus dem Anolytstrom 29 kann jedoch der Sauerstoff mittels Phasentrennung 211 entnommen werden, da dieser zum größten Teil nicht in der flüssigen Phase gelöst, sondern bereits in der Gasphase vorliegt. Eine Anolytpumpe AP etwa befördert den sauerstoffbefreiten Anolytstrom 219 in den Elektrolykreislauf 214 zurück.

Der Katholytauslass 28 weist eine Drosseleinrichtung 280 auf, die den Druck in der weiterführenden Katholytleitung 28 reduziert. Der Katholytstrom 28 wird dadurch entspannt. Ein Phasentrenner 217 zweigt den Katholytstrom 28 in Gasphase 216 und Flüssigphase 218 auf. Die Katholytflüssigkeit 218 wird dem Elektroylkreislauf 214 wieder zugeführt. Der Katholyt-Gasstrom 216 kann dann einem Recyclekompressor zugeführt werden. Es kann sinnvoll sein dieses Gas 216 in Gänze wieder zusammen mit dem Kohlenstoffidoxid-Feed 22 in den Elektrolyseur 20 zu leiten. Dazu wird es z.B. mittels einer Pumpe wieder auf den Betriebsdruck der Elektrolysezelle 20 gebracht. Dies ist besonders gut dann möglich, wenn nur geringe Mengen Wasserstoff enthalten sind oder der Wasserstoffanteil in der Gastrennung 240, z.B. in einem Downstream-Prozess gut abgetrennt werden kann.

## Patentansprüche

1. Elektrolysesystem (200) zur Herstellung von Kohlenstoffmonoxid und/oder Synthesegas mit einer Druck-Elektrolysezelle (20), einem in die Druck-Elektrolysezelle (20) führenden Katholyteinlass (26) und einem aus der Druck-Elektrolysezelle (20) herausführenden Katholytauslass, wobei der Katholytauslass in eine Katholytleitung (28) mündet, welche eine Drosseleinrichtung (280) und einen Phasentrenner (217) aufweist, der die Katholytleitung (28) in eine Katholyt-Gasleitung und eine Katholyt-Flüssigleitung aufteilt, **dadurch gekennzeichnet, dass** die Katholyt-Gasleitung einen Kompressor aufweist und zur Rückführung des im Phasentrenner (217) abgetrennten Gasstroms in die Druck-Elektrolysezelle (20) ausgelegt ist.

2. Elektrolyseverfahren zur Herstellung von Kohlenstoffmonoxid und/oder Synthesegas in dem Elektrolysesystem nach Anspruch 1, wobei in den Verfahren Edukte (21, 22) in die Druck-Elektrolysezelle (20) eingeleitet und an einer Kathode (K) reduziert werden, wobei anschließend der Druck auf den gasbeladenen Katholytstrom reduziert wird, zur Bildung einer Gasphase, wobei der gasbeladene Katholytstrom im Phasentrenner (217) in einen Gasstrom (216) und einem von Gas befreiten Flüssigstrom (218) getrennt wird, wobei der Gasstrom (216) in den Kompressor eingespeist wird und der Gasstrom (216) nach einer Druckerhöhung im Kompressor in die Druck-Elektrolysezelle (20) rückgeführt wird.

3. Elektrolyseverfahren nach Anspruch 2, **dadurch gekennzeichnet, dass** ein gasbeladener Anolytstrom mittels einer Gas-Flüssig-Trennung (211) von Sauerstoff befreit wird unter Bildung eines von Sauerstoff befreiten Anolytstroms (219).

4. Elektrolyseverfahren nach Anspruch 2 oder 3, **dadurch gekennzeichnet, dass** der von Gas befreite Flüssigstrom (218) auf einen Druck über 2 bar gebracht und anschließend mit dem von Sauerstoff befreiten Anolytstrom (219) vereinigt wird.

5. Elektrolyseverfahren nach Anspruch 3, **dadurch gekennzeichnet, dass** der von Sauerstoff befreite Anolytstrom (219) wieder mit dem vom Gas befreiten Flüssigkeitsstrom (218) zum Elektrolytstrom (214) vereinigt wird.

6. Elektrolyseverfahren nach Anspruch 5, **dadurch gekennzeichnet, dass** die Elektrolyseabwärme über den Elektrolytstrom (214) abgeführt wird.

## Claims

1. An electrolysis system (200) for production of carbon monoxide and/or synthesis gas, comprising a pressure electrolysis cell (20), a catholyte inlet (26) that leads into the pressure electrolysis cell (20), and a catholyte outlet (28) that leads out of the pressure electrolysis cell (20), wherein the catholyte outlet (28) opens into a catholyte conduit (28) having a throttle device (280) and a phase separator (217) that divides the catholyte conduit (28) into a catholyte gas conduit and a catholyte liquid conduit, **characterized in that** the catholyte gas conduit has a compressor and is designed to recycle the gas stream separated off in the phase separator (217) into the pressure electrolysis cell (20).

2. An electrolysis method for production of carbon monoxide and/or synthesis gas in the electrolysis system as claimed in claim 1, wherein, in the methods, reactants (21, 22) are introduced into the pressure electrolysis cell (20) and reduced at a cathode (K), wherein the pressure on the gas-laden catholyte stream is then reduced in order to form a gas phase, wherein the gas-laden catholyte stream is separated in the phase separator (217) into a gas stream (216) and a liquid stream (218) that has been freed of gas, wherein the gas stream (216) is fed into the compressor and the gas stream (216), after increasing the pressure in the compressor, is recycled into the pressure electrolysis cell (20).

3. The electrolysis method as claimed in claim 2, **characterized in that** a gas-laden anolyte stream is freed of oxygen by means of a gas-liquid separation (211) to form an anolyte stream (219) that has been freed of oxygen.

4. The electrolysis method as claimed in claim 2 or 3, **characterized in that** the liquid stream (218) that has been freed of gas is brought to a pressure above 2 bar and then combined with the anolyte stream (219) that has been freed of oxygen.

5. The electrolysis method as claimed in claim 3, **characterized in that** the anolyte stream (219) that has been freed of oxygen is combined again with the liquid stream (218) that has been freed of gas to give the electrolyte stream (214) .

6. The electrolysis method as claimed in claim 5, **characterized in that** the waste heat from the electrolysis is removed via the electrolyte stream (214).

## Revendications

1. Système (200) d'électrolyse pour la production du monoxyde de carbone et/ou du gaz de synthèse comprenant une cellule (20) d'électrolyse sous pression, une entrée (26) d'électrolyte allant à la cellule (20) d'électrolyse sous pression et une sortie de catholyte sortant de la cellule (20) d'électrolyse sous pression, dans lequel la sortie de catholyte débouche dans un conduit (28) pour du catholyte, qui a un dispositif (280) d'étranglement et un séparateur (217) de phases, qui subdivise le conduit (28) pour du catholyte en un conduit pour du gaz de catholyte et en un conduit pour du liquide de catholyte, **caractérisé en ce que** le conduit pour du gaz de catholyte a un compresseur et est conçu pour le retour à la cellule (20) d'électrolyse sous pression du courant gazeux séparé dans le séparateur (217) de phases.

2. Procédé d'électrolyse pour la production du monoxyde de carbone et/ou du gaz de synthèse dans le système d'électrolyse suivant la revendication 1, dans lequel, dans le procédé, on introduit des éduits (21, 22) dans la cellule (20) d'électrolyse sous pression et on les réduit à une cathode (K), dans lequel ensuite on réduit la pression sur le courant de catholyte chargé de gaz, pour la formation d'une phase gazeuse, dans lequel on sépare, dans le séparateur (217) de phases, le courant de catholyte chargé de gaz en un courant (216) gazeux et un courant (218) liquide exempt de gaz, dans lequel on envoie le courant (216) gazeux dans le compresseur et on retourne le courant (216) gazeux à la cellule (20) d'électrolyse sous pression, après une élévation de la pression dans le compresseur.

3. Procédé d'électrolyse suivant la revendication 2, **caractérisé en ce qu'**au moyen d'une séparation (211) gaz - liquide, on rend exempt d'oxygène un courant d'anolyte chargé de gaz avec formation d'un courant (219) d'anolyte exempt d'oxygène.

4. Procédé d'électrolyse suivant la revendication 2 ou 3, **caractérisé en ce qu'**on met le courant (218) de liquide exempt de gaz à une pression supérieure à 2 bar et on le réunit ensuite au courant (219) d'anolyte exempt d'oxygène.

5. Procédé d'électrolyse suivant la revendication 3, **caractérisé en ce que** l'on réunit, en le courant (214) d'électrolyte, le courant (219) d'anolyte exempt d'oxygène à nouveau au courant (218) de liquide exempt de gaz.

6. Procédé d'électrolyse suivant la revendication 5, **caractérisé en ce qu'**on évacue la chaleur perdue d'électrolyse par le courant (214) d'électrolyte.
